# EUROPEAN PATENT APPLICATION

(11) **EP 3 480 034 A1**
(43) Date of publication of application: **08.05.2019**
(21) Application number: 17820188.5
(22) Date of filing: 28.06.2017
(51) Int. Cl.: B60C 17/06

(54) **TIRE/WHEEL ASSEMBLY**

(30) Priority: 29.06.2016 JP 2016128374
(71) Applicant: The Yokohama Rubber Co., Ltd., Minato-ku Tokyo 105-8685 (JP)
(72) Inventor: KIMURA, Kazushi, Hiratsuka-shi Kanagawa 254-8601 (JP); SHIMADA, Genichirou, Hiratsuka-shi Kanagawa 254-8601 (JP); KAGEYAMA, Hirokazu, Hiratsuka-shi Kanagawa 254-8601 (JP)
(74) Representative: Dilg, Haeusler, Schindelmann Patentanwaltsgesellschaft mbH
(86) International application number: PCT/JP2017/023694
(87) International publication number: WO 2018/003834

(57) **Abstract**

A tire-wheel assembly with durability during run-flat traveling improved beyond conventional levels is provided. The tire-wheel assembly includes a run-flat support member (3) disposed on an inner side of a tread portion of a pneumatic tire (2), wherein the run-flat support member (3) is made from a foamed body and has a height 1/2 or greater of a cavity height of the pneumatic tire (2); when an internal pressure of the pneumatic tire (2) is higher than a predetermined air pressure, the run-flat support member (3) does not come into contact with a rim (1) of the wheel, a side portion (5) of the pneumatic tire, or an inner circumferential surface of a bead portion (6); and
when an internal pressure of the pneumatic tire (2) is equal to or lower than a predetermined air pressure, an inner side of the run-flat support member (3) in a tire radial direction comes into contact with an outer circumference of the rim (1) of the wheel and/or the inner circumferential surface of the bead portion (3) of the pneumatic tire (2).

## Description

### Technical Field

The present invention relates to a tire-wheel assembly with improved durability during run-flat traveling.

### Background Art

Run-flat tires make traveling possible in emergency situations such as when a pneumatic tire is punctured or decreases in internal pressure. Generally, a run-flat tire has a structure that includes a reinforcing layer reinforcing a sidewall portion that supports the tire tread portion when internal pressure decreases. Unfortunately, compared to a normal tubeless tire, the tire has high rigidity as well as reduced drivability, reduced riding comfort, and worsened tire noise due to an increase in tire weight. Other proposed ways to enable emergency traveling include employing a structure with an inner flange portion provided on a rim body designed with a shape so that in emergency situations the inner rim flange portion supports the tread portion and installing an inner ring, a separate member from the tire, inside the tire so that the inner ring supports the tire when the tire is punctured or decreases in internal pressure.

Methods of installing an inner ring inside a tire to be supported by a rim include the methods described in Patent Documents 1 and 2 in which an annular body with a dish-shaped cross section is disposed. However, in these methods, in installing the inner ring on the rim, to prevent the tire from separating from the rim (rim separation) when internal pressure decreases, a tire bead portion must be installed strongly supporting a flange portion of the rim from the inside. In response to this, the proposed methods include structures including a plurality of separate support elements and having different materials. However, installing the inner ring inside the tire involves, after one tire bead is mounted on the rim, the inner ring being inserted through a small space between the other tire bead and the rim flange, installed in a predetermined position, and then the bead must be fit on the rim flange in a similar manner. This requires complex and specialized tools and technology.

Employing a member other than an annular body with a dish-shaped cross section has been proposed. Patent Documents 3 and 4 describe heightening an inner flange portion of a rim to prevent rim separation and installing a run-flat tire support body with a ring-shape in a rim portion between both inner flange portions. However, with this method, a rim with a comparatively high inner flange requires that a wheel with a special shape be manufactured. Also, because the run-flat support member is preinstalled along the outer circumference of the rim, mounting the tire is extremely difficult and even impossible depending on the shape and size of the tire. In Patent Document 4, the structure and material of the run-flat support member is a polyurethane foam elastic member. In Patent Documents 5 and 6, a base member made of a resin foamed body and a non-foaming resin outer layer portion or a composite structure including this reinforcing layer are described as answers to the problems of durability and the like. However, they do not solve the problem of installation in the tire.

In Patent Documents 7, 8, and 9, the run-flat tire traveling support body is a support body with a configuration including an inner circumferential surface body and an outer circumferential surface body disposed around the rim outer circumferential surface of the wheel and a rib coupling these bodies in the radial direction. This configuration achieves the effects of weight reduction and enhancing riding comfort. However, the problem of mounting the tire on the wheel rim is not solved.

### Citation List

### Patent Literature

Patent Document 1: JP H10-297226 A
Patent Document 2: JP (translation of PCT application) 2001-519279 A
Patent Document 3: JP 2003-136924 A
Patent Document 4: JP 2004-291725 A
Patent Document 5: JP 2005-313736 A
Patent Document 6: JP 2005-313791 A
Patent Document 7: JP H06-305310 A
Patent Document 8: JP 2007-237904 A
Patent Document 9: JP 2008-296749 A

### Summary of Invention

### Technical Problem

An object of the present invention is to provide a traveling stability during run-flat traveling equal to or better than that of known run-flat tires while maintaining steering stability and riding comfort to levels similar to that of known tubeless tires.

### Solution to Problem

The present inventors, upon thorough examination, found that disposing a run-flat support member on the inner side of a tread portion of a pneumatic tire results in almost no change in the easy of mounting the inner side of tires on rims compared to typical tire wheel mounting, and thus arrived at the invention of a tire-wheel assembly that supports a tire tread and bead portion during run-flat traveling.

To achieve the objects described above, a tire-wheel assembly according to an embodiment of the present invention includes:
a run-flat support member disposed on an inner side of a tread portion of a pneumatic tire, wherein
the run-flat support member is made from a foamed body and has a height 1/2 or greater of a cavity height of the pneumatic tire;
when an internal pressure of the pneumatic tire is higher than a predetermined air pressure, the run-flat support member does not come into contact with a rim of the wheel, a side portion of the pneumatic tire, or
an inner circumferential surface of a bead portion; and
when an internal pressure of the pneumatic tire is equal to or lower than a predetermined air pressure, an inner side of the run-flat support member in a tire radial direction comes into contact with an outer circumference of the rim of the wheel and/or the inner circumferential surface of the bead portion of the pneumatic tire.

### Advantageous Effects of Invention

In a tire-wheel assembly according to an embodiment of the present invention, the run-flat support member made from a foamed body is disposed in the tire cavity corresponding to the inner side of the tread portion of the tire, the height of the run-flat support member is 1/2 or greater of the cavity height of the tire, when the tire internal pressure is greater than a predetermined air pressure, the run-flat support member does not come into contact with the rim of the wheel, the side portion of the tire, or the inner circumferential surface of the bead portion, and when the tire internal pressure is equal to or less than a predetermined air pressure, in the ground contact region with the road contact surface, the run-flat support member flexes due to the load and comes into contact with the outer circumference of the rim of the wheel and/or the inner circumferential surface of the bead portion of the tire. Such a pneumatic tire has excellent rim mountability and steering stability, and has driving performance and durability during run-flat traveling beyond conventional levels while ensuring riding comfort.

A density of the foamed body is preferably from 0.05 to 0.3 g/cm³. Preferably, a compression strength of the foamed body at 10% strain is 20 N/cm² or greater, and a bending strength of the foamed body at 5% strain is 30 N/cm² or greater. By the density, compression strength, and the bending strength of the foamed body being in this range, the durability during run-flat traveling can be further enhanced.

The run-flat support member preferably includes a plurality of sections divided in a tire circumferential direction. This further improves rim mountability. The run-flat support member can be fixed to an inner circumference region corresponding to the inner side of the tread portion via at least one selected from an adhesive, adhesive material, cushioning material, a foamed molded article, and a mechanical fixing jig.

In the tire-wheel assembly, in a meridian direction cross section of the pneumatic tire, preferably a cross-sectional area of the foamed body is equal to or greater than 1/4 of a cross-sectional area of the cavity portion of the pneumatic tire.

The run-flat support member can be a composite structural member including at least one selected from the foamed body, rubber, plastic, and metal. Preferably, the foamed body is a polyurethane foam made from a foamable compound with polyol, polyisocyanate, and water as main components. The foamable compound may further include at least one selected from a filler, fiber, an adhesion promoter, a surfactant, and an anti-aging agent.

### Brief Description of Drawings

- FIG. 1: is a cross-sectional view that schematically illustrates a tire-wheel assembly according to one embodiment of the present invention.
- FIG. 2: is a cross-sectional view that schematically illustrates a tire-wheel assembly according to another embodiment of the present invention.
- FIG. 3: is a cross-sectional view that schematically illustrates a tire-wheel assembly according to yet another embodiment of the present invention.
- FIG. 4: is a cross-sectional view that schematically illustrates a tire-wheel assembly according to yet another embodiment of the present invention.

### Description of Embodiments

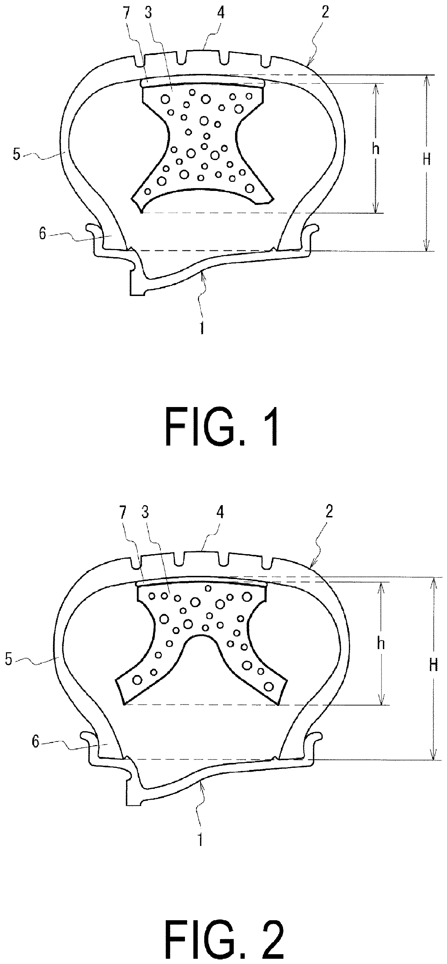

FIGS. 1 and 2 are cross-sectional views in a tire meridian direction that schematically illustrate tire-wheel assemblies according to embodiments of the present invention. In the tire-wheel assembly in FIGS. 1 and 2, a pneumatic tire 2 is mounted on a rim 1 of a wheel, and a run-flat support member 3 made from a foamed body is disposed on the inner side of a tread portion 4 in a cavity portion of the pneumatic tire 2. By the run-flat support member 3 made from a foamed body being disposed on the inner circumferential side in the tire cavity portion inward of a region corresponding to the tread portion in the tire radial direction, the weight of the run-flat support member 3 can be reduced and the rim mounting workability can be greatly enhanced. Additionally, during run-flat traveling, the driving performance and durability can be improved beyond conventional levels.

The inner circumferential side of the run-flat support member 3 is formed as the base of the run-flat support member 3 and is in contact with the outer circumference of the rim of the wheel and/or the bead portion of the pneumatic tire during run-flat traveling. In the embodiment of FIG. 1, the inner side of the run-flat support member 3 in the tire radial direction is in contact with the outer circumferential surface of the rim 1 during run-flat traveling. In the embodiment of FIG. 2, the inner side of the run-flat support member 3 in the tire radial direction is in contact with the inner circumferential surface of the bead portion 6 during run-flat traveling. The outer circumference of the run-flat support member 3 is a support surface that supports the inner circumferential surface of the pneumatic tire during run-flat traveling.

The run-flat support member 3 is made from a foamed body and has a height h that is 1/2 or greater of a cavity height H of the pneumatic tire 2. The height h of the run-flat support member 3 preferably ranges from 1/2 times to 9/10 times and more preferably ranges from 3/5 times to 4/5 times of the cavity height H of the tire 2. By setting the height h of the run-flat support member 3 to 1/2 times or greater of the cavity height H, traveling stability during run-flat traveling can be ensured. In the present specification, the height h of the run-flat support member 3 is the radial distance from an inner end point of the run-flat support member 3 in the tire radial direction to a radially outer end point, when the run-flat support member 3 is disposed on the inner side of the tread portion. The cavity height H of the pneumatic tire 2 is the radial distance from the tip of the bead portion 6 to the centrally located inner end point of the tread portion.

In the present invention, when the internal pressure of the present invention is greater than the predetermined air pressure, in other words, under normal travel conditions, the run-flat support member 3 does not come into contact with the outer circumferential surface of the rim 1 of the wheel, the side portion 5 of the pneumatic tire 2, and the inner circumferential surface of the bead portion 6. Such a pneumatic tire has excellent steering stability similar to that of pneumatic tires without a run-flat support member and exhibits driving performance with good ride comfort. When the internal pressure of the pneumatic tire 2 is equal to or less than a predetermined air pressure, in other words, during emergency travel after a puncture or the like, the inner side of the run-flat support member 3 in the tire radial direction comes into contact with the outer circumference of the rim 1 of the wheel and/or the inner circumferential surface of the bead portion of the pneumatic tire 2. Thus, this contact portion forms a base of the run-flat support member 3, a base portion of the run-flat support member 3 that supports the pneumatic tire 2, and enables run-flat traveling.

The run-flat support member 3 can be disposed as a plurality of sections divided in the tire circumferential direction. This makes rim mounting even easier and further reduces the weight of the run-flat support member 3. The number of divided sections of the run-flat support member 3 is not particularly limited, but is preferably from 2 to 20, and more preferably from 2 to 16. When the number of divided sections of the run-flat support member 3 is too large, the work of attaching them to the inner side of the tread portion in the tire radial direction is complicated.

When the run-flat support member 3 is disposed as a plurality of divided sections in the tire circumferential direction, the interval between adjacent sections in the circumferential direction is not particularly limited, but is preferably from 0.1 to 2.0 times the circumferential length of the section and more preferably from 0.2 to 1.5 times. By setting the interval between sections within such a range, interference between adjacent sections occurring during run-flat traveling can be suppressed.

In an embodiment of the present invention, the density of the foamed body is preferably from 0.05 to 0.30 g/cm³ and more preferably from 0.08 to 0.25 g/cm³. Setting the density of the foamed body in the range can further reduce the weight of the run-flat support member. In the present specification, the density of the foamed body can be measured in accordance with Japanese Industrial Standards (JIS) A 9511.

The compression strength of the foamed body that forms the run-flat support member 3 at 10% strain is preferably 8 N/cm² or greater, more preferably 20 N/cm² or greater, and even more preferably from 20 to 30 N/cm². By the compression strength of the foamed body being 8 N/cm² or greater, excellent load resistance and durability can be achieved. In the present specification, the compression strength of the foamed body can be measured in accordance with JIS A 9511 as compression strength at 10% strain.

The bending strength of the foamed body that forms the run-flat support member 3 at 5% strain is preferably 15 N/cm² or greater, more preferably 30 N/cm² or greater, and even more preferably from 30 to 40 N/cm². By the bending strength of the foamed body being 15 N/cm² or greater, excellent strain resistance can be achieved. In the present specification, the bending strength of the foamed body can be measured in accordance with JIS A 9511 as bending strength at 5% strain.

In a cross section in the meridian direction of the tire-wheel assembly of an embodiment of the present invention, the cross-sectional area of the run-flat support member is preferably 1/4 or greater of the cross-sectional area of the cavity portion of the pneumatic tire and more preferably from 1/2 to 3/4. The cross-sectional area of the cavity portion of the pneumatic tire is defined as the area bordered by the inner circumference of the pneumatic tire and the outer circumference of the rim of the wheel. By the cross-sectional area of the foamed body being 1/4 or greater of the cross-sectional area of the cavity portion of the pneumatic tire, the durability of the tire can be further enhanced.

The tire-wheel assembly according to an embodiment of the present invention is disposed and fixed on the inner side of the tread portion 4 of the run-flat support member 3. A fixing means 7 for fixing the run-flat support member 3 is not particularly limited, and examples include at least one selected from an adhesive, adhesive material, cushioning material, a foamed molded article, and a mechanical fixing jig. The adhesive, adhesive material, cushioning material, foamed molded article, and mechanical fixing jig are not particularly limited providing they are configured to fix the run-flat support member 3 to the inner side of the tread portion 4. Generally used adhesives, adhesive materials, cushioning materials, foamed molded articles, and mechanical fixing jigs can be used. Note that the foamed molded article that forms the fixing means 7 is different from the foamed body forming the run-flat support member 3.

In the present invention, the material forming the foamed body is not particularly limited, and any material with the density, the compression strength, and the bending strength described above can be used. Examples of the material forming the foamed body include foamable resins of foamed polyurethane, polystyrene, polyolefin, phenol resin, polyvinyl chloride, urea resin, silicone, polyimide, melamine resin, or the like. Of these, polyurethane foam is preferable.

Polyurethane foam is a foamable resin made from a polymer containing an urethane bond (-NHCOO-) produced via condensation of a compound including an isocyanate group (-NCO) and a compound including a hydroxyl group (-OH). An example of the compound including an isocyanate group is a polyisocyanate compound including two or more isocyanate groups per molecule. Examples of the polyisocyanate compound include diisocyanate compounds of aromatic polyisocyanates such as tolylene diisocyanate (TDI), diphenylmethane diisocyanate (MDI), phenylene diisocyanate, xylylene diisocyanate (XDI), tetramethylxylylene diisocyanate (TMXDI), tolidine diisocyanate (TODI), naphthalene diisocyanate (NDI), and the like, aliphatic polyisocyanates such as hexamethylene diisocyanate (HDI), trimethylhexamethylene diisocyanate (TMHDI), lysine diisocyanate, norbornane diisocyanate (NBDI), and the like, and alicyclic polyisocyanates such as transcyclohexane-1,4-diisocyanate, isophorone diisocyanate (IPDI), H6XDI (hydrogenated XDI) H12MDI (hydrogenated MDI), H6TDI (hydrogenated TDI); polyisocyanate compounds such as polymethylene polyphenylene polyisocyanate; carbodiimide-modified polyisocyanates of these isocyanate compounds; isocyanurate-modified polyisocyanates of these isocyanate compounds; and urethane prepolymers obtained by reacting these isocyanate compounds with the above-described polyol compounds; and the like. These polyisocyanate compounds may be used alone or may be used in any combination of two or more types.

An example of the compound including a hydroxyl group is a polyol compound including two or more hydroxyl groups per molecule. Examples of the polyol compound include polyether polyols, polyester polyols, polycarbonate polyols, and mixtures including these polyol compounds and other polyols. Of these, polycarbonate polyols are preferable.

Examples of polyether polyol include polyols obtained by adding at least one polyhydric alcohol selected from the group consisting of ethylene glycol, diethylene glycol, propylene glycol, dipropylene glycol, glycerin, 1,1,1-trimethylolpropane, 1,2,5-hexanetriol, 1,3-butanediol, 1,4-butanediol, 4,4'-dihydroxyphenylpropane, 4,4'-dihydroxyphenylmethane, and pentaerythritol to at least one type selected from the group consisting of ethylene oxide, propylene oxide, butylene oxide, and styrene oxide; a polyoxytetramethylene oxide; and the like.

Examples of the polyester polyol include condensation polymers of one or two or more low molecular weight polyols such as ethylene glycol, propylene glycol, butanediol, pentanediol, hexanediol, cyclohexanedimethanol, glycerin, 1,1,1-trimethylolpropane and one or two or more low molecular weight carboxylic acid and/or oligomeric acid such as glutaric acid, adipic acid, pimelic acid, suberic acid, sebacic acid, terephthalic acid, isophthalic acid, and dimer acid; ring-opened polymers such as propiolactone and valerolactone; and the like.

The polycarbonate polyol is produced via a reaction such as a demethanolation condensation reaction of polyol and dimethyl carbonate; a dephenolation condensation reaction of polyol and diphenyl carbonate; a de-ethylene glycolation condensation reaction of polyol and ethylene carbonate; or the like. Examples of the polyol used in these reactions include saturated or unsaturated glycols such as 1,6-hexanediol, diethylene glycol, triethylene glycol, propylene glycol, 1,3-butanediol, 1,4-butanediol, neopentyl glycol, pentanediol, 3-methyl-1,5-pentanediol, octanediol, 1,4-butynediol, dipropylene glycol, tripropylene glycol, polytetramethylene ether glycol; alicyclic glycols such as 1,4-cyclohexane diglycol and 1,4-cyclohexane dimethanol; and the like.

Examples of other polyols include polymer polyols; polybutadiene polyols; hydrogenated polybutadiene polyols; acrylic polyols; low-molecular weight polyols such as ethylene glycol, diethylene glycol, propylene glycol, dipropylene glycol, butanediol, pentanediol, hexanediol, polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), polypropylene glycol stearylamine (for example, N,N-bis(2-methyl-2-hydroxyethyl)stearylamine), and tris(2-hydroxyethyl)isocyanurate; and the like.

In the present invention, the material forming the foamed body is preferably a polyurethane foam made from a foamable compound with polyol, polyisocyanate, and water as main components. More preferably, the polyurethane foam includes a foaming component with carbon dioxide gas as a main component, the carbon dioxide gas being produced from the reaction between the main components, a polyol, a polyisocyanate, and water. Even more preferably, the polyurethane foam is made from a foamable compound including a polycarbonate diol, a polymethylene polyphenylene polyisocyanate, and water as main components.

The foamable compound may further include at least one selected from a filler, fiber, an adhesion promoter, a surfactant, and an anti-aging agent. By including such ingredients, the durability during run-flat traveling can be further enhanced.

The run-flat support member 3 can be a composite structural member including at least one selected from the foamed body described above, rubber, plastic, and metal. By forming the run-flat support member 3 from such a composite structural member, the traveling stability and durability during run-flat traveling can be further increased.

The run-flat support member made from the foamed body is preferably pre-molded with the foamed body in a predetermined shape. The obtained run-flat support member made from a foamed body is fixed and disposed on the inner side of the tread portion of the pneumatic tire using the fixing means 7. Then, the pneumatic tire is mounted on a rim in a similar manner to that of pneumatic tires without a run-flat support member to obtain a tire-wheel assembly.

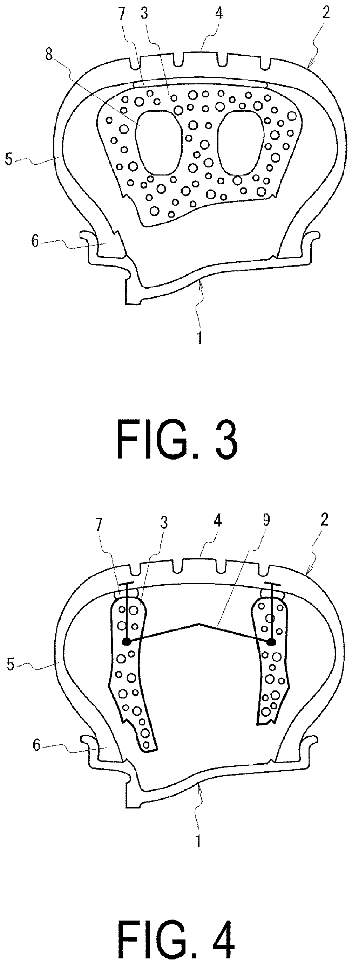

FIG. 3 is a cross-sectional view of a tire-wheel assembly of another embodiment. In this embodiment, the foamed body has a hollow structure. The hollow structure includes at least one air hole 8 and preferably includes two or more. By the foamed body with a hollow structure being provided, the weight of the run-flat support member can be further reduced. Note that the air hole 8 has a larger cross section than the bubbles in the constituent material of the foamed body. For example, in terms of diameter, the diameter of the air hole 8 in a cross section is preferably equal to or greater than 10 times the diameter of the bubbles of the foamed body and more preferably from 20 to 1000 times.

FIG. 4 is a cross-sectional view of a tire-wheel assembly according to an embodiment. In this embodiment, a run-flat support member made from at least two foamed bodies is disposed on the inner side of the tire tread portion at intervals in the tire lateral direction. The foamed bodies are connected to one another via an elastic member 9. Preferably, a plurality of the elastic members 9 are disposed at intervals in the circumferential direction of the foamed bodies. By disposing a plurality of the annular foamed bodies with a narrow width in this manner, the weight of the run-flat support member can be further reduced. Additionally, by the annular foamed bodies being coupled via the elastic member 9, the foamed bodies can be prevented from collapsing and the durability during run-flat traveling can be further increased. The elastic member 9 may extend to the inner side of the pneumatic tire 2 and be bonded with the carcass layer or other structural members. By the elastic member 9 extending to the inner side of the pneumatic tire 2, durability during run-flat traveling can be further increased.

The present invention is further explained below by examples. However, the scope of the present invention is not limited to these examples.

### Examples

### Examples 1 to 3

Foamable compounds including the compounds "foamed bodies 1 to 3" indicated in Table 1 were weighted out, and then agitated for 1 minute at room temperature (25°C). They were then immediately injected into a mold of a predetermined shape. After foaming for approximately 30 minutes, the foaming phenomenon ceased. The reaction products were left to stand for 24 hours. When the foaming and the polymerization reaction was complete, foamed bodies 1 to 3 were obtained.

The obtained foamed bodies 1 to 3 were measured for compression strength and bending strength using the measurement methods described below.

### Compression Strength

Sample pieces for measurement were prepared from the obtained foamed bodies in accordance with JIS A9511. Using the sample pieces for measurement, the compression strength at 10% strain was measured in accordance with JIS A9511 by conducting a compression test with a deformation speed of 5 mm/min at a temperature of 23°C.

### Bending Strength

Sample pieces for measurement were prepared from the obtained foamed bodies in accordance with JIS A9511. Using the sample pieces for measurement, the bending strength at 5% strain was measured in accordance with JIS A9511 by conducting a bending test with a deformation speed of 20 mm/min at a temperature of 23°C.

A mold of a predetermined shape was used for the mold for forming the run-flat support member 3 illustrated in FIG. 1, and run-flat support members made from the three types of foamed bodies 1 to 3 described above were molded. Using an adhesive, each of the obtained run-flat support members was fixed and disposed on the inner side of the tread portion of a pneumatic tire (size: 185/65R15). The cavity height H of the pneumatic tire is 113 mm, the height h of the run-flat support member is 68 mm, and the cross-sectional area of the foamed body is 3/5 of the cross-sectional area of the cavity portion of the pneumatic tire. The number of sections in the tire circumferential direction of the run-flat support member is 16, the circumferential length per one section is 110 mm, and the interval in the circumferential direction between adjacent sections is 9 mm. A run-flat traveling test for the obtained tire-wheel assemblies and weighing of the tire-wheel assemblies were conducted by the methods described below.

### Run-flat Traveling Test

The test tires were mounted on wheels having a rim size of 18x7.5J, mounted on a test vehicle, and inflated to an air pressure of 230 kPa, except for the right side drive axle tire whose valve core was removed, and the vehicle was run on an asphalt road surface test course at an average speed of 80 km/h. Running was continued until a driver felt vibration caused by the breakdown of the tire and the running distance was measured. Such measurement was performed by three test drivers, and the average running distance was found. Evaluation results are expressed as index values with the value of the tire of the Conventional Example being defined as 100. Larger index values indicate superior run-flat durability. Note that for the tire of the Conventional Example, a run-flat tire including a side reinforcing resin body as the support body was used.

### Weight of Tire-wheel Assembly

The weight of each of the tire-wheel assemblies was measured with the test tires being mounted on wheels having a rim size of 18x7.5J and adjusted to an air pressure of 230 kPa. The obtained results are expressed as index values with the value of the Conventional Example being defined as 100. Smaller index values indicate lower tire-wheel assembly weight and, thus, superior results. Note that the tire of the Conventional Example was setup in the same manner.

### Example 4

The mold for forming the run-flat support member 3 illustrated in FIG. 2 was used, and a run-flat support member made from the foamed body 2 described above was molded. A run-flat traveling test for the obtained tire-wheel assembly and weighing were conducted by the methods described above.

### Example 5

The mold for forming the run-flat support member 3 illustrated in FIG. 3 was used, and a run-flat support member made from the foamed body 3 described above was molded. A run-flat traveling test for the obtained tire-wheel assembly and weighing were conducted by the methods described above.

**[Table 1-1]**

| | | Conventional Example | Example 1 | Example 2 |
|---|---|---|---|---|
| Shape of run-flat support member | | | FIG. 1 | FIG. 1 |
| Composition of foamed body | | | Foamed body 1 | Foamed body 2 |
| Polyol compound | Parts by mass | | 100 | 100 |
| Amine compound | Parts by mass | | 0.4 | 0.4 |
| Catalyst | Parts by mass | | 0.5 | 0.5 |
| Foam stabilizer | Parts by mass | | 1.2 | 1.2 |
| Isocyanate compound 1 | Parts by mass | | 20 | 40 |
| Isocyanate compound 2 | Parts by mass | | 20 | 40 |
| Water | Parts by mass | | 5 | 10 |
| Density | g/cm³ | | 0.18 | 0.15 |
| Compression strength | N/cm² | | 34 | 51 |
| Bending strength | N/cm² | | 67 | 83 |
| Durability during run-flat traveling | Index value | 100 | 98 | 107 |
| Weight of tire-wheel assembly | Index value | 100 | 96 | 96 |

**[Table 1-2]**

| | | Example 3 | Example 4 | Example 5 |
|---|---|---|---|---|
| Shape of run-flat support member | | FIG. 1 | FIG. 2 | FIG. 3 |
| Composition of foamed body | | Foamed body 3 | Foamed body 2 | Foamed body 3 |
| Polyol compound | Parts by mass | 100 | 100 | 100 |
| Amine compound | Parts by mass | 0.4 | 0.4 | 0.4 |
| Catalyst | Parts by mass | 0.5 | 0.5 | 0.5 |
| Foam stabilizer | Parts by mass | 1.2 | 1.2 | 1.2 |
| Isocyanate compound 1 | Parts by mass | 60 | 40 | 60 |
| Isocyanate compound 2 | Parts by mass | 60 | 40 | 60 |
| Water | Parts by mass | 10 | 10 | 10 |
| Density | g/cm³ | 0.14 | 0.15 | 0.13 |
| Compression strength | N/cm² | 50 | 51 | 50 |
| Bending strength | N/cm² | 82 | 83 | 82 |
| Durability during run-flat traveling | Index value | 105 | 102 | 102 |
| Weight of tire-wheel assembly | Index value | 96 | 90 | 93 |

The types of raw materials used are shown in Table 1 below.
- Polyol compound: polycarbonate diol, available from Asahi Kasei Corporation T5651
- Amine compound: 1,4-diazabicyclo[2.2.2]octane, available from Tokyo Chemical Industry Co., Ltd.
- Catalyst: tin octylate, available from Nitto Kasei Co., Ltd. Neostann U-28
- Foam stabilizer: Silicone oil, available from Dow Corning Toray FZ3703
- Isocyanate compound 1: Polymethylene polyphenyl polyisocyanate, NCO group content 31%, available from Sumika Bayer Urethane Co., Ltd. Sumidur 44V10
- Isocyanate compound 2: Polymethylene polyphenyl polyisocyanate, NCO group content 31%, available from Sumika Bayer Urethane Co., Ltd. Sumidur 44V20

The tire-wheel assemblies of Examples 1 to 5 exhibited superior durability during run-flat traveling. Additionally, the foamed bodies 1 to 3 with a low density of around 0.2 g/cm³ gave the characteristics of light weight and high durability compared to the Conventional Example.

### Reference Signs List

- 1: Rim
- 2: Pneumatic tire
- 3: Run-flat support member
- 4: Tread portion
- 5: Side portion
- 6: Bead portion
- 7: Fixing means
- 8: Air hole
- 9: Elastic member
- h: Height of run-flat support member
- H: Cavity height of pneumatic tire

## Claims

1. A tire-wheel assembly, comprising:
a run-flat support member disposed on an inner side of a tread portion of a pneumatic tire, wherein the run-flat support member is made from a foamed body and having a height 1/2 or greater of a cavity height of the pneumatic tire;
when an internal pressure of the pneumatic tire is higher than a predetermined air pressure, the run-flat support member does not come into contact with a rim of the wheel, a side portion of the pneumatic tire, or an inner circumferential surface of a bead portion; and
when an internal pressure of the pneumatic tire is equal to or lower than a predetermined air pressure, an inner side of the run-flat support member in a tire radial direction comes into contact with an outer circumference of the rim of the wheel and/or the inner circumferential surface of the bead portion of the pneumatic tire.

2. The tire-wheel assembly according to claim 1, wherein
a density of the foamed body is from 0.05 to 0.3 g/cm³.

3. The tire-wheel assembly according to claim 1 or 2, wherein
a compression strength of the foamed body at 10% strain is 20 N/cm² or greater, and
a bending strength of the foamed body at 5% strain is 30 N/cm² or greater.

4. The tire-wheel assembly according to any one of claims 1 to 3, wherein the run-flat support member comprises a plurality of sections divided in a tire circumferential direction.

5. The tire-wheel assembly according to any one of claims 1 to 4, wherein the run-flat support member is fixed to the inner side of the tread portion via at least one selected from an adhesive, adhesive material, cushioning material, a foamed molded article, and a mechanical fixing jig.

6. The tire-wheel assembly according to any one of claims 1 to 5, wherein in a meridian direction cross section of the pneumatic tire, a cross-sectional area of the foamed body is equal to or greater than 1/4 of a cross-sectional area of the cavity portion of the pneumatic tire.

7. The tire-wheel assembly according to any one of claims 1 to 6, wherein the run-flat support member is a composite structural member comprising at least one selected from the foamed body, rubber, plastic, and metal.

8. The tire-wheel assembly according to any one of claims 1 to 7, wherein the foamed body is a polyurethane foam made from a foamable compound with polyol, polyisocyanate, and water as main components.

9. The tire-wheel assembly according to claim 8, wherein
the foamable compound further comprising at least one selected from a filler, fiber, an adhesion promoter, a surfactant, and an anti-aging agent.
